# EUROPÄISCHE PATENTSCHRIFT

(11) **EP 3 830 455 B1**
(45) Veröffentlichungstag und Bekanntmachung des Hinweises auf die Patenterteilung: **28.09.2022**
(21) Anmeldenummer: 18750400.6
(22) Anmeldetag: 01.08.2018
(51) Int. Cl.: F16K 1/12, F16K 31/06, F16K 27/02

(54) **AXIAL DURCHSTRÖMBARES FLUIDVENTIL**
FLUID VALVE THROUGH WHICH FLUID CAN FLOW AXIALLY
SOUPAPE À FLUIDE POUVANT ÊTRE TRAVERSÉE AXIALEMENT

(43) Veröffentlichungstag der Anmeldung: 09.06.2021
(73) Patentinhaber: Pierburg GmbH, 41460 Neuss (DE)
(72) Erfinder: SADIKU, Besart, 41460 Neuss (DE); WAGNER, Juri, 52445 Titz (DE); WANZEK, Tim, 45134 Essen (DE)
(74) Vertreter: terpatent Patentanwälte ter Smitten Eberlein-Van Hoof Rütten Daubert
(86) Internationale Anmeldenummer: PCT/EP2018/070859
(87) Internationale Veröffentlichungsnummer: WO 2020/025126

(56) Entgegenhaltungen:
- EP-A1- 3 106 726
- DE-A1- 3 019 178
- DE-A1-102013 107 743
- US-A- 6 076 803

## Beschreibung

Die Erfindung betrifft ein axial durchströmbares Fluidventil, insbesondere Kühlmittelabsperrventil, mit einem Ventilgehäuse, das einen Durchströmungskanal nach radial außen begrenzt, mit einem Strömungsgehäuseabschnitt, einem Einlassstutzen, der an einem ersten axialen Ende des Strömungsgehäuseabschnitts befestigt ist, und einem Auslassstutzen, der an einem dem ersten axialen Ende gegenüberliegenden zweiten axialen Ende des Strömungsgehäuseabschnitts befestigt ist, einem Magnetgehäuse, das innerhalb des Ventilgehäuses angeordnet ist und den Durchströmungskanal nach radial innen begrenzt, einem Elektromagnet mit einer Spule und einer Rückschlussvorrichtung, der innerhalb des Magnetgehäuses angeordnet ist, und einem axial verschiebbar in dem Ventilgehäuse angeordneten Ventilkörper, der über den Elektromagneten auf einen Ventilsitz absenkbar ist und von dem Ventilsitz abhebbar ist, um eine Durchströmung des Fluidventils zu verändern.

Derartige Fluidventile werden auch als Koaxialventile, Hydraulikventile oder Kühlwasserabsperrventile bezeichnet. Diese Fluidventile dienen beispielswiese zur Abschaltung oder Freigabe eines Kühlmittelweges in einem Kraftfahrzeug, um einerseits eine möglichst schnelle Aufheizung der durchströmbaren Aggregate sicherzustellen und andererseits deren Überhitzung zu verhindern. Um eine solche Applikation möglichst kostengünstig ausführen zu können, muss einerseits eine möglichst druckverlustarme Durchströmung des Fluidventils sichergestellt werden, um die aufzubringende Pumpleistung möglichst gering zu halten und andererseits der Stromverbrauch des Fluidventils, welches üblicherweise elektromagnetisch betätigt wird, möglichst geringgehalten werden, um keine zusätzliche Energie zu verbrauchen. Da in Kraftfahrzeugen im Allgemeinen nur ein begrenzter Bauraum zur Verfügung steht, muss das Fluidventil ferner möglichst kompakt ausgebildet sein. Aus diesen Gründen werden elektromagnetische Koaxialventile verwendet, bei denen der Elektromagnet radial innerhalb des Durchströmungskanals des Fluidventils angeordnet ist und somit auf der radialen Außenseite umströmt wird. Auf Grund des radial außenliegenden Durchströmungskanals können diese Fluidventlle einen ausreichend großen Durchströmungsquerschnitts für hohe Volumenströme bereitstellen und dabei dennoch sehr kompakt ausgeführt sein. Durch die geringen Baugrößen und daraus folgend kleinen und leichten beweglichen Teilen, ist auch der Stromverbrauch dieser Fluidventile relativ gering. Bei derartigen Fluidventilen muss jedoch ein spezielles Magnetgehäuse für den Elektromagneten vorgesehen sein, das den Durchströmungskanal auf der radialen Innenseite fluiddicht begrenzt und somit ein Eindringen von Fluid in den umströmten Elektromagnet verhindert.

Ein derartiges Fluidventil ist beispielsweise aus der EP 3 106 726 A1 bekannt. Dieses axial durchströmbare Fluidventil weist ein Ventilgehäuse auf, das einen Durchströmungskanal nach radial außen begrenzt. Das Ventilgehäuse umfasst einen Strömungsgehäuseabschnitt, einen Einlassstutzen, der an einem ersten axialen Ende des Strömungsgehäuseabschnitts befestigt ist, und einen Auslassstutzen, der an einem dem ersten axialen Ende gegenüberliegenden zweiten axialen Ende des Strömungsgehäuseabschnitts befestigt ist. In dem Ventilgehäuse ist ein Magnetgehäuse angeordnet, das den Durchströmungskanal nach radial innen begrenzt und in dem ein Elektromagnet mit einer Spule und einer Rückschlussvorrichtung angeordnet ist. Das Fluidventil umfasst ferner einen axial verschiebbar in dem Ventilgehäuse angeordneten Ventilkörper, der über den Elektromagneten auf einen Ventilsitz absenkbar ist und von dem Ventilsitz abhebbar ist, um eine Durchströmung des Fluidventils zu verändern. Das offenbarte Magnetgehäuse ist aus mehreren Magnetgehäuse-Teilen aufgebaut, die formschlüssig miteinander verbunden sind. Zwischen den Kontaktflächen der einzelnen Magnetgehäuse-Teile sind jedoch zumindest kleine Verbindungs-Spalte vorhanden, über die potenziell Fluid in das Magnetgehäuse eindringen und den Elektromagneten beschädigen kann. Hierdurch kann es zu einer Fehlfunktion oder sogar zu einem Totalausfall des Fluidventils kommen. Ein weiteres axial durchströmbares Fluidventil ist aus US 6 076 803 A bekannt.

Es stellt sich daher die Aufgabe, ein kompaktes und kostengünstiges axial durchströmbares Fluidventil zu schaffen, das einen geringen Druckverlust aufweist und eine zuverlässige Abschaltung oder Freigabe eines Kühlmittelweges über eine lange Lebensdauer ermöglicht.

Diese Aufgabe wird durch ein axial durchströmbares Fluidventil mit den Merkmalen des Hauptanspruchs 1 gelöst.

Dadurch, dass das Magnetgehäuse durch einen Umspritzungskörper gebildet ist, durch den der Elektromagnet umspritzt ist und der die Spule, die Rückschlussvorrichtung sowie ein von dem Ventilsitz abgewandtes axiales Ende des Elektromagneten umschließt, wird eine Beschädigung des Elektromagneten durch in das Magnetgehäuse eindringendes Fluid effektiv verhindert, da das Magnetgehäuse einstückig ausgebildet ist und direkt an dem Elektromagneten anliegt. Insbesondere weist das erfindungsgemäße Magnetgehäuse keine Verbindungs-Spalte auf, über die Fluid in das Magnetgehäuse eindringen kann. Ferner schafft der Umspritzungskörper ein sehr kompaktes Magnetgehäuse das kostengünstig hergestellt werden kann.

Vorzugsweise füllt das Magnetgehäuse einen ersten radialen Spalt zwischen der Spule und der Rückschlussvorrichtung aus. Das Magnetgehäuse liegt folglich direkt an der besonders empfindlichen Spule an, sodass die feuchtigkeitsempfindliche Spule effektiv gegen ein Eindringen von Fluid geschützt ist. Ferner sind die Spule und die Rückschlussvorrichtung durch das Magnetgehäuse zuverlässig zueinander ausgerichtet und positioniert, ohne dass hierfür separate Befestigungsmittel vorgesehen werden müssen.

Für die externe elektrische Ansteuerung des Elektromagneten muss an dem Ventilgehäuse ein Anschlussstecker vorgesehen sein, der elektrisch mit der Spule des Elektromagneten verbunden ist. Im Allgemeinen weist der Anschlussstecker eine Steckerfassung auf, die sich von radial außerhalb des Ventilgehäuses durch das Ventilgehäuse und den Durchströmungskanal bis an das Magnetgehäuse erstreckt. In der Steckerfassung sind elektrische Kontaktelemente geführt, die sich bis in das Magnetgehäuse erstrecken und den Anschlussstecker elektrisch mit der Spule verbinden. In einer bevorzugten Ausführung der Erfindung ist die Steckerfassung einstückig mit dem Magnetgehäuse ausgebildet, sodass zwischen der Steckerfassung und dem Magnetgehäuse kein Verbindungs-Spalt vorhanden ist, über den Fluid in das Magnetgehäuse eindringen kann.

Vorteilhafterweise ist der Strömungsgehäuseabschnitt des Ventilgehäuses einstückig mit dem Magnetgehäuse ausgebildet, sodass das Magnetgehäuse zuverlässig und exakt in dem Ventilgehäuse ausgerichtet und positioniert ist, ohne dass hierfür separate Befestigungsmittel vorgesehen werden müssen. Ferner sind für die Herstellung des Strömungsgehäuseabschnitts keine zusätzlichen Herstellungs- und Montageschritte erforderlich.

In einer vorteilhaften Ausführung der Erfindung ist radial innerhalb des Magnetgehäuses eine Führungshülse angeordnet, in der ein von dem Elektromagneten bewegbarer Anker geführt ist und ist in einem dem Ventilsitz zugewandten axialen Ende des Magnetgehäuses ein erster Dichtring angeordnet, der einen zweiten radialen Spalt zwischen dem Magnetgehäuse und der Führungshülse abdichtet. Die Führungshülse ist radial innerhalb des Elektromagneten angeordnet, sodass bei angesteuertem Elektromagneten auf den Anker ein Magnetfeld mit einer hohen Axialkomponente einwirkt, durch das der Anker axial in der Führungsbuchse bewegbar ist. Der Anker ist, vorzugsweise direkt, mit dem Ventilkörper verbunden, sodass der Ventilkörper über den Elektromagnet in Axialrichtung bewegbar ist. Hierbei verhindert der erste Dichtring eine Fluid-Leckage über den radialen Spalt zwischen dem Magnetgehäuse und der Führungshülse in das Magnetgehäuse.

Vorzugsweise weist das Magnetgehäuse einen radial nach innen gerichteten Stützabsatz auf, weist die Führungshülse einen radial nach außen gerichteten Stützkragen auf, und ist der erste Dichtring axial zwischen dem Stützabsatz und dem Stützkragen angeordnet. Der Stützabsatz liegt an der radialen Außenseite der Führungshülse an und stützt die Führungshülse radial. Der Stützkragen liegt axial an dem Magnetgehäuse an, vorzugsweise an einer Stirnfläche des Magnetgehäuses, und erschwert somit ein Eindringen von Fluid in den zweiten radialen Spalt zwischen dem Magnetgehäuse und der Führungshülse, der von dem Dichtring abgedichtet ist. Diese Anordnung schafft eine effektive Abdichtung des Spalts zwischen dem Magnetgehäuse und der Führungshülse, sodass eine Fluid-Leckage entlang dieses Spalts in das Magnetgehäuse vollständig unterdrückt ist.

In einer bevorzugten Ausführung der Erfindung weist der Ventilkörper auf der radialen Außenseite einen Führungsring auf, und ist am dem Ventilsitz zugewandten axialen Ende des Magnetgehäuses ein Führungselement angeordnet, das den Führungsring radial umschließt. Der Führungsring und das Führungselement schaffen eine zuverlässige radiale Führung für den Ventilkörper, sodass der Ventilkörper exakt auf den Ventilsitz absenkbar ist, um den Ventilsitz vollständig zu verschließen.

Vorteilhafterweise weist der Ventilkörper eine axiale Druckausgleichbohrung auf, über die der Ventilkörper von dem Fluid axial durchströmbar ist, und ist ein zweiter Dichtring vorgesehen, der einen dritten radialen Spalt zwischen dem Führungselement und dem Führungsring abdichtet. Über die Druckausgleichbohrung findet ein Druckausgleich zwischen der dem Ventilsitz zugewandten Vorderseite des Ventilkörpers und der von dem Ventilsitz abgewandten Rückseite des Ventilkörpers statt, sodass die für die Bewegung des Ventilkörpers erforderliche Stellkraft minimal ist. Durch den zweiten Dichtring ist hierbei, insbesondere im geschlossenen Zustand des Fluidventils, eine Fluid-Leckage von der Rückseite des Ventilkörpers über den dritten radialen Spalt in den Strömungskanal im Wesentlichen vollständig unterdrückt.

In einer vorteilhaften Ausführung der Erfindung ist der zweite Dichtring ein Lippendichtring mit einem im Wesentlichen U-förmigen Profil, der derart angeordnet Ist, dass die offene axiale Seite des zweiten Dichtrings von dem Ventilsitz abgewandt ist. Der Lippendichtring ist kostengünstig und schafft bei derartiger Anordnung eine zuverlässige Abdichtung des dritten radialen Spalts von der Rückseite des Ventils ausgehend in Richtung des Strömungskanals. Hierdurch ist im geschlossenen Zustand des Fluidventils eine Fluid-Leckage durch die Druckausgleichsbohrung auf die Rückseite des Ventilkörpers und von dort entlang des dritten radialen Spalts in den Strömungskanal verhindert.

Vorzugsweise ist der Ventilsitz an dem Einlassstutzen angeordnet. Der Ventilkörper wird folglich auf seiner Vorderseite angeströmt, sodass zum Öffnen des Fluidventils nur eine relativ geringe Stellkraft erforderlich ist, da der Ventilkörper hierbei in Strömungsrichtung bewegt wird. Vorzugsweise ist die Vorderseite des Ventilkörpers strömungsoptimiert ausgebildet, sodass auch zum Schließen des Ventilkörpers, wobei der Ventilkörper gegen die Strömungsrichtung bewegt wird, nur eine relativ geringe Stellkraft erforderlich ist.

In einer bevorzugten Ausführung der Erfindung weist der Strömungskanal entlang seiner axialen Erstreckung einen im Wesentlichen konstanten Durchströmungsquerschnitt auf. Auf Grund von für die Befestigung des Magnetgehäuses an dem Ventilgehäuse erforderliche Befestigungsmittel, die sich durch den Durchströmungskanal erstrecken, kann der Durchströmungsquerschnitts lokal geringfügig verändert sein. Der Strömungskanal weist jedoch keine signifikanten Querschnittsänderungen auf, an denen es zu einer Aufstauung des Fluids kommen kann, sodass eine druckverlustarme Durchströmung des Fluidventils sichergestellt ist.

Vorteilhafterweise weist der Strömungskanal einen knickfreien, also einen kontinuierlichen und fließenden, Verlauf auf. Der Begriff "knickfrei" bedeutet hierbei mathematisch betrachtet, dass der Verlauf durch eine stetige und differenzierbare Funktion beschreibbar Ist. Dadurch, dass der Strömungskanal keine Knicke aufweist, an denen es zu einer Aufstauung des Fluids kommen kann, ist eine druckverlustarme Durchströmung des Fluidventils sichergestellt.

Es wird somit ein axial durchströmbares Fluidventil, insbesondere Kühlmittelabsperrventil für eine Verbrennungskraftmaschine, geschaffen, das kompakt aufgebaut und kostengünstig herstellbar ist und auch bei hohen Volumenströmen einen geringen Druckverlust aufweist. Hierbei wird zuverlässig ein Eindringen von Fluid in den Elektromagneten verhindert sowie eine Fluid-Leckage in den Strömungskanal bei geschlossenem Fluidventil unterdrückt, sodass das erfindungsgemäße Fluidventil eine zuverlässige Abschaltung oder Freigabe eines Kühlmittelweges über eine lange Lebensdauer ermöglicht.

Ein Ausführungsbeispiel eines erfindungsgemäßen axial durchströmbaren Fluidventils wird nachfolgend anhand der beigefügten Figuren beschrieben, wobei
Figur 1 eine Seitenansicht eines erfindungsgemäßen Fluidventils in geschnittener Darstellung zeigt, wobei das Fluidventil geöffnet ist, und

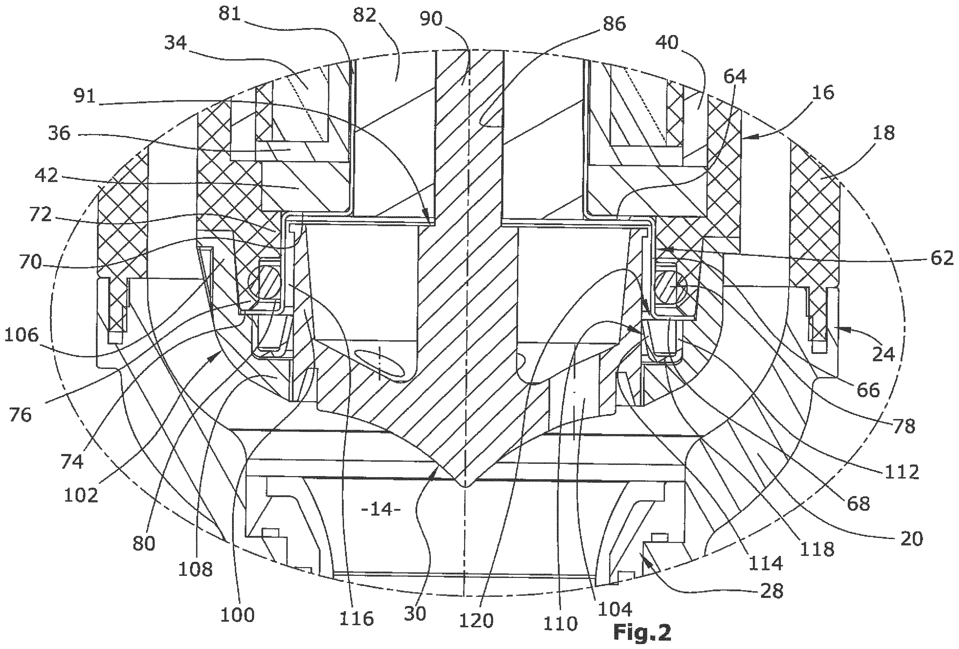

Figur 2 eine vergrößerte Darstellung des in Figur 1 eingezeichneten Ausschnitts des erfindungsgemäßen Fluidventils zeigt.

Das erfindungsgemäße Fluidventil 10, das beispielsweise für Kühlkreisläufe von Verbrennungsmotoren, Hybrid- oder Elektrofahrzeugen verwendet werden kann, umfasst ein Ventilgehäuse 12, das einen Durchströmungskanal 14 für ein Fluid nach radial außen begrenzt, und ein Magnetgehäuse 16, das radial innerhalb des Ventilgehäuses 12 angeordnet ist und den Durchströmungskanal 14 nach radial innen begrenzt.

Das Ventilgehäuse 12 ist mehrteilig aufgebaut und umfasst einen im Wesentlichen zylinderförmigen Strömungsgehäuseabschnitt 18, einen Einlassstutzen 20 und einen Auslassstutzen 22. Der Strömungsgehäuseabschnitt 18 ist im vorliegenden Ausführungsbeispiel einstückig mit dem Magnetgehäuse 16 ausgebildet. Der Einlassstutzen 20 ist an einem in Strömungsrichtung vorderen ersten axialen Strömungsgehäuseabschnitt-Ende 24 befestigt und der Auslassstutzen 22 ist an einem in Strömungsrichtung hinteren zweiten axialen Strömungsgehäuseabschnitt-Ende 26 befestigt. In dem Einlassstutzen 20 Ist ein Ventilsitz 28 angeordnet, auf den ein axial verschiebbar in dem Ventilgehäuse 12 angeordneter Ventilkörper 30 absenkbar ist, um den Durchströmungskanal 14 vollständig zu verschließen.

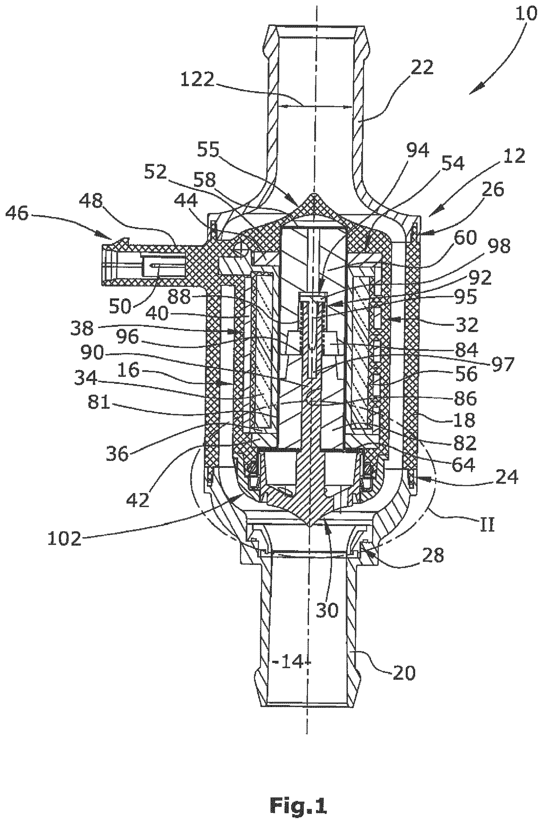

In dem Magnetgehäuse 16 ist ein Elektromagnet 32 angeordnet, über den der Ventilkörper 30 axial bewegbar ist, sodass der Ventilkörper 30 auf den Ventilsitz 28 absenkbar und von dem Ventilsitz 28 abhebbar ist, um das Fluidventil 10 zwischen einer in Figur 1 dargestellten Offen-Stellung und einer Schließ-Stellung umzuschalten. Der Elektromagnet 32 umfasst eine Spule 34, die auf einen Spulenträger 36 gewickelt ist. Der Elektromagnet 32 umfasst ferner eine Rückschlussvorrichtung 38, die durch ein die Spule 34 radial umgebendes Joch 40 sowie zwei an den axialen Enden des Spulenträgers 36 angeordnete Rückschlussbleche 42,44 gebildet ist.

Zur elektrischen Ansteuerung der Spule 34 ist an dem Strömungsgehäuseabschnitt 18 des Ventilgehäuses 12 ein Anschlussstecker 46 mit einer Steckerfassung 48 ausgebildet. Im vorliegenden Ausführungsbeispiel ist die Steckerfassung 48 einstückig mit dem Strömungsgehäuseabschnitt 18 und dem Magnetgehäuse 16 ausgebildet, sodass das Magnetgehäuse 16 durch die Steckerfassung 48 mit dem Strömungsgehäuseabschnitt 18 verbunden ist. Der Anschlussstecker 46 weist elektrische Kontaktelemente 50 auf, die sich durch die Steckerfassung 48 bis in das Magnetgehäuse 16 erstrecken und elektrisch mit der Spule 34 verbunden sind.

Das Magnetgehäuse 16, sowie im vorliegenden Ausführungsbeispiel auch der Strömungsgehäuseabschnitt 18 und die Steckerfassung 48, sind durch einen Umspritzungskörper 52 gebildet, durch den der Elektromagnet 32 umspritzt ist. Der Umspritzungskörper 52 umschließt die Spule 34, die Rückschlussvorrichtung 38 sowie ein von dem Ventilsitz 28 abgewandtes axiales Elektromagnet-Ende 54. Das Magnetgehäuse 16 ist folglich im Wesentlichen becherförmig ausgebildet und ist in Richtung des Ventilsitzes 28 offen. Ein Magnetgehäuse-Boden 55 weist eine strömungsoptimierte tropfenförmige Außenkontur auf. Im vorliegenden Ausführungsbeispiel füllt das Magnetgehäuse 16 einen zwischen der Spule 34 und dem Joch 40 der Rückschlussvorrichtung 38 ausgebildeten ersten radialen Spalt 56. Das Joch 40 ist somit im Wesentlichen vollständig in das Magnetgehäuse 16 eingebettet.

Im Innern des Magnetgehäuses 16, im Speziellen radial innerhalb des Spulenträgers 36, ist eine im Wesentlichen becherförmige Führungshülse 58 angeordnet, die mit ihrer offenen Seite in Richtung des Ventilsitzes 28 weisend angeordnet ist. Die Führungshülse 58 weist an ihrem dem Ventilsitz 28 zugewandten offenen axialen Ende einen sich nach radial außen erstreckenden Stützkragen 62 mit einem im Wesentlichen S-förmigen Profil auf. Der Stützkragen 62 umfasst einen sich nach radial außen erstreckenden ersten Kragen-Schenkel 64, einen an den ersten Kragen-Schenkels 64 anschließenden und sich axial in Richtung des Ventilsitzes 28 erstreckenden zweiten Kragen-Schenkel 66, sowie einen an den zweiten Kragen-Schenkel 66 anschließenden und sich nach radial außen erstreckenden dritten Kragen-Schenkel 68. Der erste Kragen-Schenkel 64 liegt axial an einer dem Ventilsitz 28 zugewandten Rückschlussblech-Stirnfläche 70 des ersten Rückschlussblechs 42 an. Der zweite Kragen-Schenkel 66 liegt auf der radialen Außenseite an einem radial nach innen gerichteten Stützabsatz 72 des Magnetgehäuses 16 an. Der dritte Kragen-Schenkel 68 liegt axial an der dem Ventilsitz 28 zugewandten ringförmigen Magnetgehäuse-Stirnfläche 74 an. Axial zwischen dem dritten Kragen-Schenkel 68 und dem Stützabsatz 72 sowie radial zwischen dem zweiten Kragen-Schenkel 66 und einem dem Ventilsitz 28 zugewandten axialen Magnetgehäuse-Ende 76 ist ein erster Dichtring 78 angeordnet. Der erste Dichtring 78 dichtet einen zwischen dem Magnetgehäuse 16 und der Führungshülse 58 ausgebildeten zweiten radialen Spalt 80 ab.

Radial innerhalb eines an die von dem Ventilsitz 28 wegweisende axiale Seite des Stützkragen 62 angrenzenden axialen Führungshülsen-Abschnitts 81 ist ein Magnetkern 82 befestigt. Der Magnetkern 82 definiert zusammen mit der Führungshülse 58 einen Hubraum 84, in dem ein von dem Elektromagnet 32 bewegbarer Anker 60 axial verschiebbar angeordnet ist. Der Magnetkern 82 weist eine zentrale axiale Führungsbohrung 86 auf und der Anker 60 weist auf der dem Magnetkern 82 zugewandten Seite eine zentrale Sackbohrung 88 auf. Durch die Führungsbohrung 86 erstreckt sich eine Ventilstange 90, die an einem von dem Ventilsitz 28 wegweisenden axialen Ventilkörper-Ende 91 befestigt ist. Die Ventilstange 90 taucht mit einem von dem Ventilkörper 30 wegweisenden axialen Ventilstangen-Ende 92 in die Sackbohrung 88 des Ankers 60 ein. An dem axialen Ventilstangen-Ende 92 ist eine Federhalterung 94 mit einem sich axial erstreckenden Stift 95 und einem sich im Wesentlichen radial erstreckenden Kopf 98 angeordnet. Die Federhalterung 94 ist über den Stift 95 in einer Ventilstangen-Sackbohrung 97 befestigt und der Kopf 98 ragt radial über die Ventilstange 90 hinaus. Die Federhalterung 94 kann beispielsweise eine Niete sein, die über eine Pressverbindung in der Ventilstangen-Sackbohrung 97 befestigt ist, oder kann eine Schraube sein, die in die Ventilstangen-Sackbohrung 97 eingeschraubt ist. In dem Hubraum 84 ist eine die Ventilstange 90 radial umgebende Vorspannfeder 96 angeordnet, die axial an dem Magnetkern 82 und an dem Kopf 98 anliegt und den Ventilkörper 30 axial von dem Ventilsitz 28 wegweisend vorspannt. Das Fluidventil 10 ist folglich im stromlosen Zustand geöffnet.

Der Ventilkörper 30 weist einen im Wesentlichen pfeilspitzenförmigen Querschnitt auf und ist auf der radialen Außenseite über einen Führungsring 100 in einem Führungselement 102 radial geführt, das an dem axialen Magnetgehäuse-Ende 76 angeordneten ist und den Führungsring 100 radial umschließt. Der Ventilkörper 30 weist eine axiale Druckausgleichsbohrung 104 auf, über die der Ventilkörper 30 von dem Fluid axial durchströmbar ist.

Das Führungselement 102 weist einen sich im Wesentlichen axial erstreckenden Befestigungsabschnitt 106 und einen an den Befestigungsabschnitt 106 anschließenden und radial nach innen gerichteten Führungsabschnitt 108 auf. Radial zwischen dem Befestigungsabschnitt 106 und dem Führungsring 100 ist ein zweiter Dichtring 110 angeordnet, der im vorliegenden Ausführungsbeispiel ein Lippendichtring mit einem im Wesentlichen U-förmigen Profil ist. Der zweite Dichtring 110 liegt mit einem radial äußeren Dichtring-Schenkel 112 radial an der radialen Innenseite des Befestigungsabschnitts 106 und axial an der dem Ventilsitz 28 zugewandten axialen Seite des dritten Kragen-Schenkels 68 an. Der zweite Dichtring 110 liegt mit einem radial inneren Dichtring-Schenkel 114 an der radialen Außenseite des Führungsrings 100 an und dichtet somit einen dritten radialen Spalt 116 zwischen dem Führungsring 100 und dem Führungselement 102 ab. Der zweite Dichtring 110 liegt mit einem sich im Wesentlichen radial erstreckenden Dichtring-Schenkel 118 an der von dem Ventilsitz 28 wegweisenden Seite des Führungsabschnitts 108 an, sodass die offene Dichtring-Seite 120 des zweiten Dichtrings 110 von dem Ventilsitz 28 abgewandt ist.

Das Ventilgehäuse 12, das Magnetgehäuse 16, der Ventilkörper 30 und das Führungselement 102 weisen im vorliegenden Ausführungsbeispiel eine strömungsoptimierte Form auf, sodass der Durchströmungskanal 14 entlang seiner gesamten axialen Erstreckung einen Im Wesentlichen konstanten Durchströmungsquerschnitt 122 sowie einen kontinuierlichen und knickfreien Verlauf aufweist.

Die besondere Ausbildung des fluidumströmten Magnetgehäuses durch einen einstückigen Umspritzungskörper, durch den der Elektromagnet umspritzt ist, hat den Vorteil, dass das Magnetgehäuse keine Verbindungsspalte aufweist, über die Fluid in das Magnetgehäuse eindringen kann. Das erfindungsgemäße Magnetgehäuse ist ferner sehr kompakt und kann kostengünstig hergestellt werden. Dadurch, dass der Elektromagnet durch das Magnetgehäuse umspritzt ist, sind keine separaten Befestigungsvorrichtungen für die Befestigung des Elektromagneten im Magnetgehäuse erforderlich.

Es sollte deutlich sein, dass der Schutzbereich der vorliegenden Anmeldung nicht auf das beschriebene Ausführungsbeispiel beschränkt ist. Insbesondere müssen der Strömungsgehäuseabschnitt und die Steckerfassung nicht einstückig mit dem Magnetgehäuse ausgebildet sein. Es ist aber auch denkbar, dass zusätzlich zum Strömungsgehäuseabschnitt auch der Einlassstutzen oder der Auslassstutzen einstückig mit dem Magnetgehäuse ausgebildet ist. Ferner muss der Durchströmungskanal nicht zwangsläufig knickfrei ausgebildet sein und einen konstanten Durchströmungsquerschnitt aufweisen. Vorstellbar ist auch, dass der Ventilsitz an dem Auslassstutzen angeordnet ist, wobei der Ventilkörper und das Magnetgehäuse inklusive des elektromagnetischen Stellapparats entsprechend um 180° gedreht angeordnet sind, sodass der Ventilkörper von dem Magnetgehäuse in Richtung des Auslassstutzens bewegbar ist.

### Bezugszeichenliste

- 10: Fluidventil
- 12: Ventilgehäuse
- 14: Durchströmungskanal
- 16: Magnetgehäuse
- 18: Strömungsgehäuseabschnitt
- 20: Einlassstutzen
- 22: Auslassstutzen
- 24: axiales Strömungsgehäuseabschnitt-Ende
- 26: axiales Strömungsgehäuseabschnitt-Ende
- 28: Ventilsitz
- 30: Ventilkörper
- 32: Elektromagnet
- 34: Spule
- 36: Spulenträger
- 38: Rückschlussvorrichtung
- 40: Joch
- 42: Rückschlussblech
- 44: Rückschlussblech
- 46: Anschlussstecker
- 48: Steckerfassung
- 50: Kontaktelemente
- 52: Umspritzungskörper
- 54: axiales Elektromagnet-Ende
- 55: Magnetgehäuse-Boden
- 56: radialer Spalt
- 58: Führungshülse
- 60: Anker
- 62: Stützkragen
- 64: Kragen-Schenkel
- 66: Kragen-Schenkel
- 68: Kragen-Schenkel
- 70: Rückschlussblech-Stirnfläche
- 72: Stützabsatz
- 74: Magnetgehäuse-Stirnfläche
- 76: axiales Magnetgehäuse-Ende
- 78: Dichtring
- 80: radialer Spalt
- 81: axialer Führungshülsen-Abschnitts
- 82: Magnetkern
- 84: Hubraum
- 86: Führungsbohrung
- 88: Sackbohrung
- 90: Ventilstange
- 91: axiales Ventilkörper-Ende
- 92: axiales Ventilstangen-Ende
- 94: Federhalterung
- 95: Stift
- 96: Vorspannfeder
- 97: Ventilstangen-Sackbohrung
- 98: Kopf
- 100: Führungsring
- 102: Führungselement
- 104: Druckausgleichsbohrung
- 106: Befestigungsabschnitt
- 108: Führungsabschnitt
- 110: zweiter Dichtring
- 112: Dichtring-Schenkel
- 114: Dichtring-Schenkel
- 116: radialer Spalt
- 118: Dichtring-Schenkel
- 120: Dichtring-Seite
- 122: Durchströmungsquerschnitt

## Patentansprüche

1. Axial durchströmbares Fluidventil (10), insbesondere Kühlmittelabsperrventil, mit
einem Ventilgehäuse (12), das einen Durchströmungskanal (14) nach radial außen begrenzt, mit
einem Strömungsgehäuseabschnitt (18),
einem Einlassstutzen (20), der an einem ersten axialen Ende (24) des Strömungsgehäuseabschnitts (18) befestigt ist, und
einem Auslassstutzen (22), der an einem dem ersten axialen Ende (24) gegenüberliegenden zweiten axialen Ende (26) des Strömungsgehäuseabschnitts (18) befestigt ist,
einem Magnetgehäuse (16), das innerhalb des Ventilgehäuses (12) angeordnet ist und den Durchströmungskanal (14) nach radial innen begrenzt,
einem Elektromagnet (32) mit einer Spule (34) und einer Rückschlussvorrichtung (38), der innerhalb des Magnetgehäuses (16) angeordnet ist, und
einem axial verschiebbar in dem Ventilgehäuse (12) angeordneten Ventilkörper (30), der über den Elektromagneten (32) auf einen Ventilsitz (28) absenkbar ist und von dem Ventilsitz (28) abhebbar ist, um eine Durchströmung des Fluidventils (10) zu verändern,
**dadurch gekennzeichnet, dass**
das Magnetgehäuse (16) durch einen Umspritzungskörper (52) gebildet ist, durch den der Elektromagnet (32) umspritzt ist und der die Spule (34), die Rückschlussvorrichtung (38) sowie ein von dem Ventilsitz (28) abgewandtes axiales Ende (54) des Elektromagneten (32) umschließt.

2. Axial durchströmbares Fluidventil (10) nach Anspruch 1,
**dadurch gekennzeichnet, dass**
das Magnetgehäuse (16) einen ersten radialen Spalt (56) zwischen der Spule (34) und der Rückschlussvorrichtung (38) ausfüllt.

3. Axial durchströmbares Fluidventil (10) nach einem der vorigen Ansprüche,
**dadurch gekennzeichnet, dass**
an dem Ventilgehäuse (12) ein Anschlussstecker (46) mit einer Steckerfassung (48) vorgesehen ist, wobei die Steckerfassung (48) einstückig mit dem Magnetgehäuse (16) ausgebildet ist.

4. Axial durchströmbares Fluidventil (10) nach einem der vorigen Ansprüche,
**dadurch gekennzeichnet, dass**
der Strömungsgehäuseabschnitt (18) des Ventilgehäuses (12) einstückig mit dem Magnetgehäuse (16) ausgebildet ist.

5. Axial durchströmbares Fluidventil (10) nach einem der vorigen Ansprüche,
**dadurch gekennzeichnet, dass**
radial innerhalb des Magnetgehäuses (16) eine Führungshülse (58) angeordnet ist, in der ein von dem Elektromagneten (32) bewegbarer Anker (60) geführt ist, und
in einem dem Ventilsitz (28) zugewandten axialen Ende (76) des Magnetgehäuses (16) ein erster Dichtring (78) angeordnet ist, der einen zweiten radialen Spalt (80) zwischen dem Magnetgehäuse (16) und der Führungshülse (58) abdichtet.

6. Axial durchströmbares Fluidventil (10) nach Anspruch 5,
**dadurch gekennzeichnet, dass**
das Magnetgehäuse (16) einen radial nach innen gerichteten Stützabsatz (72) aufweist,
die Führungshülse (58) einen radial nach außen gerichteten Stützkragen (62) aufweist, und
der erste Dichtring (78) axial zwischen dem Stützabsatz (72) und einem sich radial erstreckenden Schenkel (68) des Stützkragens (62) angeordnet ist.

7. Axial durchströmbares Fluidventil (10) nach einem der vorigen Ansprüche,
**dadurch gekennzeichnet, dass**
der Ventilkörper (30) auf der radialen Außenseite einen Führungsring (100) aufweist, und
am dem Ventilsitz zugewandten axialen Ende (76) des Magnetgehäuses (16) ein Führungselement (102) angeordnet ist, das den Führungsring (100) radial umschließt.

8. Axial durchströmbares Fluidventil nach Anspruch 7,
**dadurch gekennzeichnet, dass**
der Ventilkörper (30) eine axiale Druckausgleichbohrung (104) aufweist, über die der Ventilkörper (30) von dem Fluid axial durchströmbar Ist, und
ein zweiter Dichtring (110) vorgesehen ist, der einen dritten radialen Spalt (116) zwischen dem Führungselement (102) und dem Führungsring (100) abdichtet.

9. Axial durchströmbares Fluidventil (10) nach Anspruch 8,
**dadurch gekennzeichnet, dass**
der zweite Dichtring (110) ein Lippendichtring mit einem im Wesentlichen U-förmigen Profil ist, der derart angeordnet ist, dass die offene axiale Seite (120) des zweiten Dichtrings (110) von dem Ventilsitz (28) abgewandt ist.

10. Axial durchströmbares Fluidventil (10) nach einem der vorigen Ansprüche,
**dadurch gekennzeichnet, dass**
der Ventilsitz (28) an dem Einlassstutzen (20) angeordnet ist.

11. Axial durchströmbares Fluidventil (10) nach einem der vorigen Ansprüche,
**dadurch gekennzeichnet, dass**
der Strömungskanal (14) entlang seiner axialen Erstreckung einen im Wesentlichen konstanten Durchströmungsquerschnitt (122) aufweist.

12. Axial durchströmbares Fluidventil (10) nach einem der vorigen Ansprüche,
**dadurch gekennzeichnet, dass**
der Strömungskanal (14) einen knickfreien Verlauf aufweist.

## Claims

1. Axial flow fluid valve (10), in particular a coolant shut-off valve, with a valve housing (12) which defines a flow channel (14) radially outwardly, with
a flow housing section (18),
an inlet port (20) which is attached to a first axial end (24) of the flow housing section (18), and
an outlet port (22) which is attached to a second axial end (26) of the flow housing section (18) opposite the first axial end (24),
a magnet housing (16) which is arranged inside the valve housing (12) and defines the flow channel (14) radially inwardly,
an electromagnet (32) with a coil (34) and a return device (38), which electromagnet (32) is arranged inside the magnet housing (16), and a valve body (30) which is arranged axially shiftably in the valve housing (12) and which can be lowered onto a valve seat (28) and lifted off from the valve seat (28) via the electromagnet (32) so as to change a throughflow of the fluid valve (10),
**characterized in that**
the magnet housing (16) is defined by an overmolded body (52) by which the electromagnet (32) is overmolded and which encloses the coil (34), the return device (38) and an axial end (54) of the electromagnet (32) remote from the valve seat (28).

2. Axial flow fluid valve (10) according to claim 1,
**characterized in that**
the magnet housing (16) fills a first radial gap (56) between the coil (34) and the return device (38).

3. Axial flow fluid valve (10) according to one of the preceding claims,
**characterized in that**
a connector plug (46) with a plug socket (48) is provided at the valve housing (12), wherein the plug socket (48) is formed integrally with the magnet housing (16).

4. Axial flow fluid valve (10) according to one of the preceding claims,
**characterized in that**
the flow housing section (18) of the valve housing (12) is formed integrally with the magnet housing (16).

5. Axial flow fluid valve (10) according to one of the preceding claims,
**characterized in that**
a guiding sleeve (58) is arranged radially inside the magnet housing (16), in which guiding sleeve (58) an armature (60) is guided which can be moved by the electromagnet (32), and
a first sealing ring (78) is arranged in an axial end (76) of the magnet housing (16) facing the valve seat (28), which first sealing ring (78) seals a second radial gap (80) between the magnet housing (16) and the guiding sleeve (58).

6. Axial flow fluid valve (10) according to claim 5,
**characterized in that**
the magnet housing (16) comprises a radially inwardly directed support shoulder (72),
the guiding sleeve (58) comprises a radially outwardly directed support flange (62), and
the first sealing ring (78) is arranged axially between the support shoulder (72) and a radially extending leg (68) of the support flange (62).

7. Axial flow fluid valve (10) according to one of the preceding claims,
**characterized in that**
the valve body (30) comprises a guiding ring (100) at the radially outer side, and
a guiding element (102) is arranged at the axial end (76) of the magnet housing (16) facing the valve seat, which guiding element (102) radially surrounds the guiding ring (100).

8. Axial flow fluid valve according to claim 7,
**characterized in that**
the valve body (30) comprises an axial pressure equalization bore (104) via which the fluid can flow axially through the valve body (30), and
a second sealing ring (110) is provided, which second sealing ring (110) seals a third radial gap (116) between the guiding element (102) and the guiding ring (100).

9. Axial flow fluid valve (10) according to claim 8,
**characterized in that**
the second sealing ring (110) is a lip seal ring which has a substantially U-shaped profile and is arranged in such a way that the open axial side (120) of the second sealing ring (110) faces away from the valve seat (28).

10. Axial flow fluid valve (10) according to any one of the preceding claims,
**characterized in that**
the valve seat (28) is arranged at the inlet port (20).

11. Axial flow fluid valve (10) according to any one of the preceding claims,
**characterized in that**
the flow channel (14) has a substantially constant flow-through cross-section (122) along its axial extent.

12. Axial flow fluid valve (10) according to any one of the preceding claims,
**characterized in that**
the flow channel (14) has a kink-free course.

## Revendications

1. Vanne à fluide à flux axial (10), en particulier vanne de fermeture pour réfrigérant, avec
un boîtier de vanne (12) qui délimite un canal d'écoulement (14) vers l'extérieur dans le sens radial, avec
une section de boîtier de flux (18),
une tubulure d'entrée (20) qui est fixée à une première extrémité axiale (24) de la section de boîtier de flux (18), et
une tubulure de sortie (22) fixée à une deuxième extrémité axiale (26) de la section de boîtier de flux (18) opposée à la première extrémité axiale (24),
un boîtier de solénoïde (16), qui est disposé à l'intérieur du boîtier de vanne (12) et qui délimite le canal d'écoulement (14) radialement vers l'intérieur,
un solénoïde (32) avec une bobine (34) et un dispositif de fermeture (38), qui est disposé à l'intérieur du boîtier de solénoïde (16), et
un corps de soupape (30) disposé de manière à pouvoir être déplacé axialement dans le boîtier de vanne (12), qui peut être abaissé sur un siège de vanne (28) par l'intermédiaire du solénoïde (32) et qui peut être soulevé du siège de vanne (28) afin de modifier un écoulement à travers la vanne à fluide (10),
**caractérisé en ce que**
le boîtier de solénoïde (16) est formé par un corps de surmoulage (52) à travers lequel le solénoïde (32) est surmoulé et qui entoure la bobine (34), le dispositif de fermeture (38) ainsi qu'une extrémité axiale (54) du solénoïde (32) opposée au siège de soupape (28).

2. Vanne à fluide à flux axial (10) selon la revendication 1,
**caractérisé en ce que**
le boîtier de solénoïde (16) remplit un premier entrefer radial (56) entre la bobine (34) et le dispositif anti-retour (38).

3. Vanne à fluide à flux axial (10) selon l'une quelconque des revendications précédentes,
**caractérisé en ce que**
un connecteur de raccordement (46) avec une douille de connecteur (48) est prévu sur le boîtier de vanne (12), la douille de connecteur (48) est formée d'une seule pièce avec le boîtier de solénoïde (16).

4. Vanne à fluide à flux axial (10) selon l'une des revendications précédentes,
**caractérisé en ce que**
la section de boîtier de flux (18) du boîtier de vanne (12) est formée d'un seul tenant avec le boîtier de solénoïde (16).

5. Vanne à fluide à flux axial (10) selon l'une quelconque des revendications précédentes,
**caractérisé en ce que**
un manchon de guidage (58) est disposé radialement à l'intérieur du boîtier de solénoïde (16), dans lequel est guidé un induit (60) qui peut être déplacé par le solénoïde (32), et
dans une extrémité axiale (76) du boîtier de solénoïde (16) tournée vers le siège de soupape (28) est disposée une première bague d'étanchéité (78) qui assure l'étanchéité d'une deuxième fente radiale (80) entre le boîtier de solénoïde (16) et le manchon de guidage (58).

6. Vanne à fluide à flux axial (10) selon la revendication 5,
**caractérisé en ce que**
le boîtier de solénoïde (16) présente un épaulement d'appui (72) orienté radialement vers l'intérieur,
le manchon de guidage (58) présente une collerette d'appui (62) orientée radialement vers l'extérieur, et
la première bague d'étanchéité (78) est disposée axialement entre l'épaulement d'appui (72) et une branche (68) orientée radialement de la collerette d'appui (62).

7. Vanne à fluide à flux axial (10) selon l'une quelconque des revendications précédentes,
**caractérisé en ce que**
le corps de vanne (30) comprend une bague de guidage (100) sur le côté extérieur radial, et
à l'extrémité axiale (76) du boîtier de solénoïde (16) tournée vers le siège de vanne est disposé un élément de guidage (102) qui entoure radialement la bague de guidage (100).

8. Vanne à fluide à flux axial selon la revendication 7,
**caractérisé en ce que**
le corps de soupape (30) présente un orifice axial de compensation de pression (104) par lequel le corps de soupape (30) peut être traversé axialement par le fluide, et
une deuxième bague d'étanchéité (110) est prévue, qui assure l'étanchéité d'une troisième fente radiale (116) entre l'élément de guidage (102) et la bague de guidage (100).

9. Vanne à fluide à flux axial (10) selon la revendication 8,
**caractérisé en ce que**
la deuxième bague d'étanchéité (110) est une bague d'étanchéité à lèvre ayant un profil substantiellement en forme de U, disposée de telle sorte que le côté axial ouvert (120) de la deuxième bague d'étanchéité (110) est opposé au siège de vanne (28).

10. Vanne à fluideà flux axial (10) selon l'une quelconque des revendications précédentes,
**caractérisé en ce que**
le siège de vanne (28) est disposé sur l'embout d'entrée (20).

11. Vanne à fluide à flux axial (10) selon l'une des revendications précédentes,
**caractérisé en ce que**
le canal d'écoulement (14) a une section transversale d'écoulement (122) substantiellement constante sur son étendue axiale.

12. Vanne à fluide à flux axial (10) selon l'une quelconque des revendications précédentes,
**caractérisé en ce que**
le canal d'écoulement (14) présente un tracé sans coude.
